# EUROPEAN PATENT APPLICATION

(11) **EP 2 096 142 A1**
(43) Date of publication of application: **02.09.2009**
(21) Application number: 09250323.4
(22) Date of filing: 10.02.2009
(51) Int. Cl.: C08L 67/04, C08K 5/3417, C08K 5/42

(54) **Resin composition**

(30) Priority: 29.02.2008 JP 2008050605
(71) Applicant: Sony Corporation, Tokyo 108-0075 (JP)
(72) Inventor: Aoki, Yuya, Tokyo 108-0075 (JP); Sato, Noritaka, Tokyo 108-0075 (JP)
(74) Representative: Ealey, Douglas Ralph

(57) **Abstract**

A resin composition includes polylactic acid resin, a plastic resin superior in heat resistance to the polylactic acid resin, and a nucleating agent that promotes crystallization of the polylactic acid resin, with the nucleating agent being a soluble azo lake pigment. The plastic resin superior in heat resistance to the polylactic acid resin is one which has a flexural modulus of elasticity no lower than 1000 MPa at 80°C.

## Description

The present invention relates to a resin composition.

Related synthetic resins have been produced mostly from fossil resources such as petroleum, coal, and natural gas. They have a strong fear in their future that fossil resources as their raw material will be exhausted soon, they accumulate in the natural world without decomposition after disposal, and their incineration emits carbon dioxide that causes global warming.

This notion has aroused a keen interest in biomass plastics which are produced from plants and microorganisms in place of fossil resources. Their raw materials are never exhausted because they originate from carbon dioxide in the atmospheric air through photosynthesis. In addition, biomass plastics are decomposed in the natural world and have less possibility of accumulating in the natural world without decomposition after disposal. Their incineration does not increase the concentration of carbon dioxide in the atmospheric air because they simply exist as an intermediate in the cycle of carbon in nature.

Among biomass plastics is polylactic acid resin, which is superior in processability and mechanical properties and available more easily and inexpensively than any other biomass plastics because it is being commercially produced. Polylactic acid resin finds use, on account of its biodegradability, as industrial materials, machine parts, medical care products, and such products as net, film, and sheet for agriculture, fishing, and civil engineering. It also finds use in applications which need heat resistance.

Such applications include enclosures and structural materials for electric appliances, which need heat resistance against softening up to about 80°C. This heat resistance means that the sample retains a sufficient flexural modulus of elasticity (or stiffness) as high as about 1000 MPa at about 80°C (measurement should conform to JIS K7171 (ISO 178) - Method for testing flexural properties of plastics). The requirement for such heat resistance is met usually by those resins which have a glass transition point (Tg) higher than 80°C. This topic will be discussed in the following.

The glass transition point is defined as the temperature at which polymeric substances, such as synthetic resins and natural rubber, which have a glass transition point, undergo glass transition. Any substance with a glass transition point has an amorphous moiety in which the intramolecular rotation of polymer chains is frozen by intermolecular forces at a low temperature for molecular thermal motion to remain inactive. This state is called glass state. On the other hand, at a high temperature for active molecular motion, the intramolecular rotation of polymer chains overcomes the intermolecular force between polymer chains. This state is called rubber state. When heated above its glass transition point, any resin becomes capable of deformation but retains its original shape unless it is given a deforming force. This is the difference between glass transition point and melting point (or the temperature at which crystals melt).

Many general-purpose resins have a flexural modulus of elasticity higher than 1000 MPa at temperatures below their glass transition point. However, their flexural modulus of elasticity decreases below 1000 MPa at temperatures above their glass transition point. Any resin in this stage is not of practical use any longer. For any resin to have good heat resistance against softening at about 80°C, it should have a glass transition point higher than 80°C.

Unfortunately, polylactic acid resin has a glass transition point in the neighborhood of 60°C and is comparatively poor in heat resistance. In fact, its molded products easily deform above this temperature. Therefore, polylactic acid resin should be improved in heat resistance so that it can be used for applications that need heat resistance.

One way of improving polylactic acid resin in heat resistance is by polymer blending or polymer alloying to form a composite material composed of polylactic acid resin and another resin having higher heat resistance than polylactic acid resin. Resins suitable for combination with polylactic acid resin are those which have a flexural modulus of elasticity greater than 1000 MPa at 80°C. Examples of such resins include polycarbonate resin, polystyrene resin, and polyacetal resin, and some grades of ABS resin (acrylonitrile-butadiene-styrene copolymer resin), polyamide resin, and amorphous polyolefin resin.

Another way of improving polylactic acid resin in heat resistance is by partial crystallization of polylactic acid resin, which increases the ratio of crystalline moiety and hardens the entire resin to improve heat resistance. This is achieved by heat treatment that is performed during or after molding. Polylactic acid resin is hard to crystallize although it takes on the crystalline structure. If polylactic acid resin is molded in the same way as ordinary general-purpose resins, it gives rise to amorphous molded items vulnerable to heat deformation. By contrast, if it undergoes heat treatment during or after molding, it partly becomes crystallized and the resulting molded items have improved heat resistance.

Unfortunately, crystallization of polylactic acid resin takes a long time. In fact, polylactic acid resin takes a much longer time for crystallization than ordinary molding cycle, which is about one minute for injection molding. Therefore, if polylactic acid resin is to be crystallized completely in the mold, injection molding takes such a long time as to greatly reduce productivity. In-mold crystallization is not practicable. Moreover, crystallization of polylactic acid resin in the usual way gives rise to crystals of the order of microns to submicrons in size, and such large crystals scatter light, making polylactic acid resin turbid and opaque.

Researches are going on to tackle the foregoing problem by promoting crystallization with the help of a crystal nucleating agent. The crystal nucleating agent becomes the primary crystal nucleus of a polymer that takes on the crystalline structure and promotes the crystal growth of a crystalline polymer. In a broad sense, it includes one which promotes crystallization of a crystalline polymer. It also includes one which accelerates the rate of crystallization of a polymer. The former crystal nucleating agent makes fine the crystals of a polymer, thereby improving the polymer's stiffness and clarity. Either of the former and latter crystal nucleating agent accelerates the rate of crystallization, thereby reducing time required for crystallization and also reducing the molding cycle time if molding and crystallization proceed simultaneously.

The crystal nucleating agent for polylactic acid resin includes, for example, metal salt of phosphonic acid having an aromatic ring and salt of melamine compound, disclosed in Japanese Patent Laid-open No. 2006-89587 and Japanese Patent Laid-open No. 2005-272679, respectively. In addition, Japanese Patent Laid-open No. 2005-17782 (pp. 8-23, chemical formulas 1-23) (hereinafter referred to as Patent Document 1) given later proposes use of an azo pigment as the crystal nucleating agent for polylactic acid resin.

However, an investigation by the present inventors shows that the crystal nucleating agent for polylactic acid resin which has been proposed so far is effective when applied to polylactic acid resin alone but is very little effective when applied to a composite material of polylactic acid resin combined with polycarbonate resin, polystyrene resin, or polyacetal resin, which is superior in heat resistance to polylactic acid resin.

The present invention is completed in view of the foregoing. It is desirable to provide a resin composition of polylactic acid resin combined with a plastic resin superior in heat resistance to the polylactic acid resin and a crystal nucleating agent that effectively promotes crystallization of the polylactic acid resin.

Various respective aspects and features of the invention are defined in the appended claims. Combinations of features from the dependent claims may be combined with features of the independent claims as appropriate and not merely as explicitly set out in the claims.

Embodiments of the present invention are directed to a resin composition which includes polylactic acid resin, a plastic resin superior in heat resistance to the polylactic acid resin, and a nucleating agent that promotes crystallization of the polylactic acid resin, with the nucleating agent being a soluble azo lake pigment. Embodiments of the present invention are directed also to a resin composition which includes polylactic acid resin, a plastic resin superior in heat resistance to the polylactic acid resin and incompletely miscible with the polylactic acid resin, and a nucleating agent that promotes crystallization of the polylactic acid resin, with the nucleating agent being present at least in the phase of polylactic acid resin.

The present inventors carried out extensive studies, which led to the finding that a soluble azo lake pigment effectively promotes crystallization of polylactic acid resin in the composite material composed of polylactic acid resin and a plastic resin superior in heat resistance to the polylactic acid resin. This finding suggested the first resin composition mentioned above.

The present inventors' continued investigation into the reason why the soluble azo lake pigment effectively promotes crystallization suggested the second resin composition mentioned above. The soluble azo lake pigment as a crystal nucleating agent contained in the resin composition is unevenly distributed in the phase of polylactic acid resin, as explained in Examples given later. By contrast, another crystal nucleating agent behaves differently if it promotes crystallization of polylactic acid resin existing alone but does not promote crystallization of polylactic acid resin combined with a plastic resin (such as polycarbonate resin) superior in heat resistance to polylactic acid resin and incompletely miscible with polylactic acid resin. Such a crystal nucleating agent contained in the resin composition is unevenly distributed in the phase of the plastic resin incompletely miscible with the polylactic acid resin. These facts indicate that the nucleating agent mentioned above does not promote crystallization of polylactic acid resin in the resin composition because it is taken into the phase of the plastic resin incompletely miscible with the polylactic acid resin. It follows, therefore, that a crystal nucleating agent would adequately promote crystallization of the polylactic acid resin contained in the resin composition if it is able to promote crystallization of polylactic acid resin and it exists at least in the phase of polylactic acid resin contained in the resin composition.

The first and second resin compositions are not the same although the former is the origin of the latter. The first resin composition has restrictions on the type of the crystal nucleating agent but the second resin composition does not, as shown in Examples given later. On the other hand, the second resin composition has restrictions on the type of the plastic resin superior in heat resistance to polylactic acid resin but the first resin composition does not.

Embodiments of the invention will now be described with reference to the accompanying drawings, throughout which like parts are referred to by like references, and in which:
Fig. 1A is a schematic diagram showing the structure of the resin composition pertaining to the embodiment of the present invention;
Fig. 1B is a schematic diagram showing the structure of the resin composition containing a crystal nucleating agent not effective for polylactic acid resin combined with a plastic resin superior in heat resistance to polylactic acid resin;
Fig. 1C is a schematic diagram showing the structure of polylactic acid resin containing a crystal nucleating agent; and
Fig. 2A is a microphotograph showing the resin composition pertaining to Example 1. Fig. 2B is a microphotograph showing the resin composition pertaining to Comparative Example 1.

According to an embodiment of the present invention, the first resin composition contains a plastic resin superior in heat resistance to polylactic acid resin. The plastic resin should be one which has a flexural modulus of elasticity greater than 1000 MPa at 80°C. Specifically, it should be at least one species of polycarbonate resin, polystyrene resin, and polyacetal resin, or at least one species of some grades of acrylonitrile-butadiene-styrene copolymer (ABS) resin, polyamide resin, and amorphous polyolefin resin which have a flexural modulus of elasticity greater than 1000 MPa at 80°C.

According to an embodiment of the present invention, the first resin composition contains a soluble azo lake pigment, which should be a first pigment (PY191 pigment) represented by the structural formula (1) below or a second pigment (PR48 pigment) represented by the structural formula (2) below. 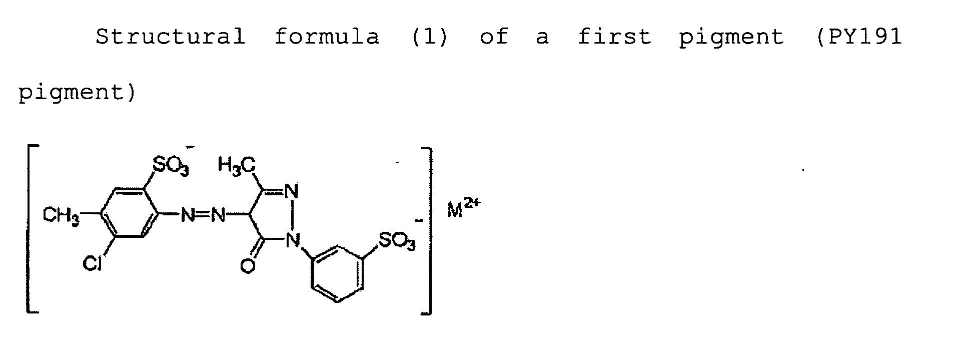 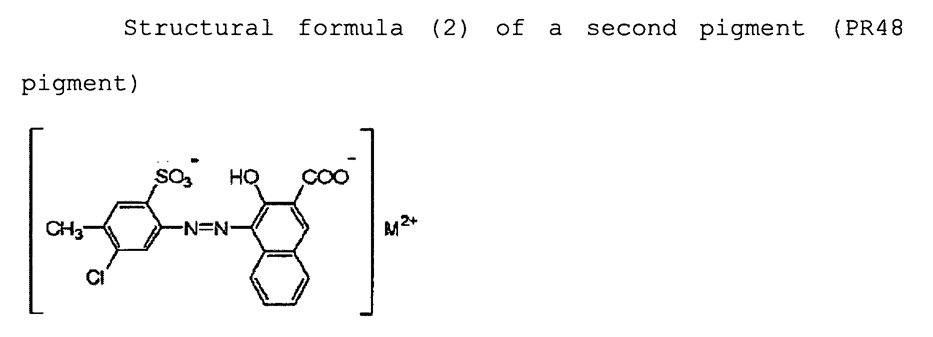 [in formulas (1) and (2), M²⁺ denotes a divalent metal ion.]

Incidentally, the symbols PY191 and PR48 denote the compounds listed in the color index issued by The Society of Dyers and Colourists, and the symbols P, Y, and R mean Pigment, Yellow, and Red, respectively. The metal represented by M includes, for example, beryllium (Be), magnesium (Mg), calcium (Ca), strontium (Sr), barium (Ba), and radium (Ra), which belong to Group II. It also includes manganese (Mn), cobalt (Co), nickel (Ni), iron (Fe), copper (Cu), and zinc (Zn), which form divalent metal ions.

According to an embodiment of the present invention, the second resin composition should selectively contain the crystal nucleating agent in the phase of polylactic acid resin. The crystal nucleating agent existing in the phase of the polylactic acid resin produces its effect on the resin composition of the polylactic acid resin combined with a plastic resin (such as polycarbonate resin) which is superior in heat resistance to the polylactic acid resin and is incompletely miscible with the polylactic acid resin.

The plastic resin, which is superior in heat resistance to the polylactic acid resin and is incompletely miscible with the polylactic acid resin, should be one which has a flexural modulus of elasticity greater than 1000 MPa. Specifically, it should be at least one species of polycarbonate resin, polystyrene resin, and polyacetal resin, or at least one species of some grades of acrylonitrile-butadiene-styrene copolymer (ABS) resin, polyamide resin, and amorphous polyolefin resin which have a flexural modulus of elasticity greater than 1000 MPa at 80°C. Organic polymers of different kinds are usually immiscible with one another. This fact is explained from thermodynamics, as mentioned in "Practical Polymer Alloy Designing" by Fumio Ide. The polylactic acid resin is immiscible with the above-mentioned plastic resin, and their melt mixture is composed of their separate phases.

The nucleating agent mentioned above should be one which exhibits the following thermal properties when added alone to the polylactic acid resin. The sample is tested by differential scanning calorimetry (DSC) in cooling from 180°C at a rate of 20°C/min. The exothermic peak that appears in DSC is greater than 23 J/g in terms of exothermic enthalpy per unit mass of polylactic acid resin which crystallizes in the region of 100 to 150°C. Any nucleating agent that meets this requirement is of practical use.

The nucleating agent should preferably be a polycyclic pigment (PY110) represented by the structural formula (3) below.

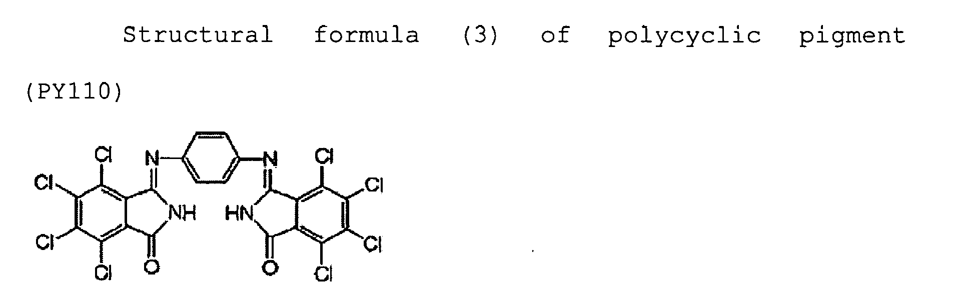

Major items relating to an embodiment of the present invention are explained in the following.

### <Mixing ratio of polylactic acid resin and a plastic resin superior in heat resistance to polylactic acid resin>

The amount of polylactic acid resin in the resin composition should be 1 to 99 wt%, preferably 10 to 99 wt%, more preferably 45 to 99 wt%.

### <Soluble azo lake pigment>

"Lake pigment" denotes an insoluble organic pigment which is prepared by precipitating a water-soluble dye with the help of a precipitant. The organic pigment is classified into azo pigments, polycyclic pigments, and other pigments (such as alkali blue).

The azo pigment is a pigment which has an azo group (-N=N-) as a chromophore. It is classified into monoazo pigments, disazo pigments, and condensed azo pigments. Monoazo pigment is a pigment which has one azo group. Disazo pigment is a pigment which has two azo groups symmetric to each other. It has a strong coloring power. Condensed azo pigment is a pigment formed by condensation reaction. It has two azo groups and also has a large molecular weight. It excels in heat resistance and solvent resistance. It includes, for example, PR144, PR166, PR214, PR242, and PBr23.

There are so-called soluble azo pigments belonging to a group classified according to the standard other than molecular structure. They are azo lake pigments prepared from a water-soluble azo dye by converting its sulfonic acid group (-SO₃H) or carboxyl group (-COOH) into a water-insoluble metal salt, such as calcium salt, barium salt, strontium salt, manganese salt, and sodium salt.

The soluble azo lake pigment includes, for example, those compounds represented by the general formula (1) below.

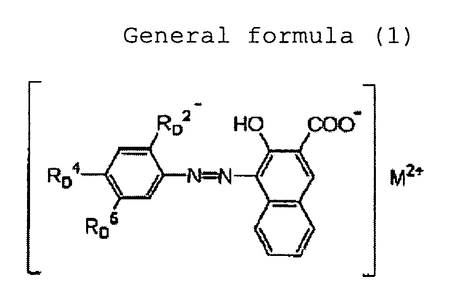

Specifically, their examples are represented by the structural formulas (4), (5), and (6) below.

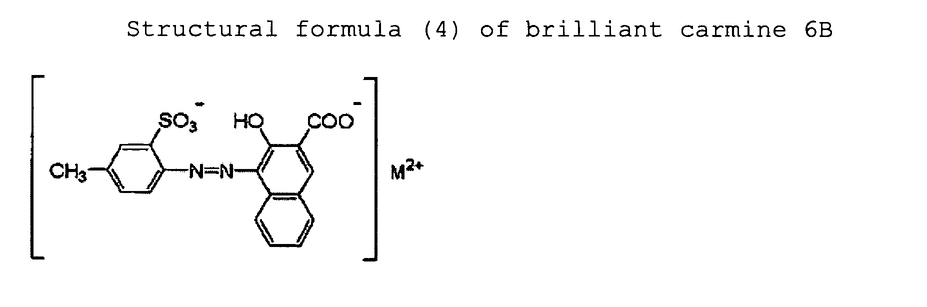

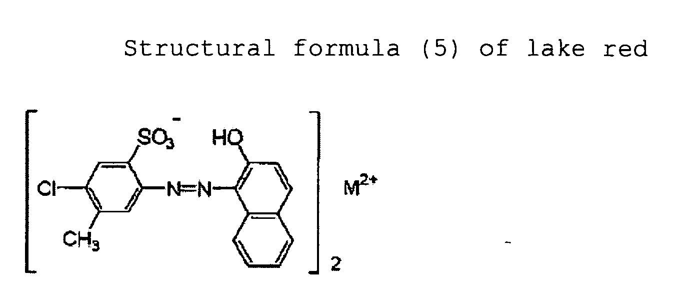

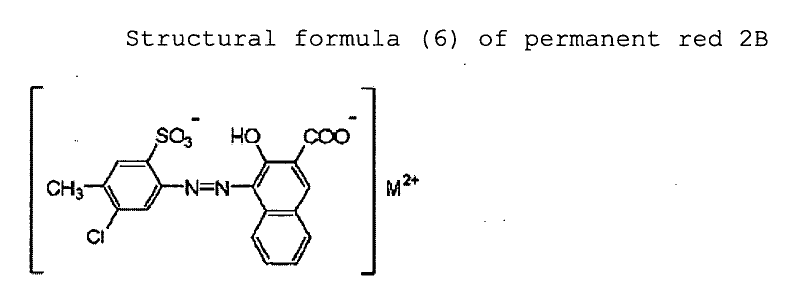

The soluble azo lake pigment also includes, for example, those compounds represented by the general formula (2) below. Specifically, an example is PY191 represented by the structural formula (1) above.

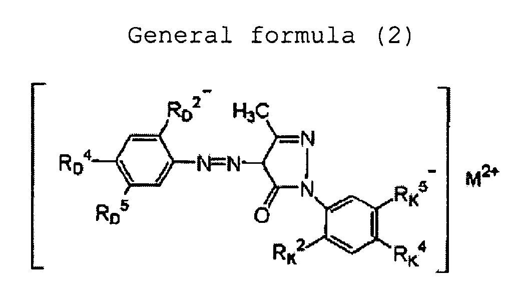

[In the general formulas (1) and (2) and the structural formulas (4) to (6), M²⁺ denotes a divalent metal ion. The metal represented by M includes, for example, beryllium (Be), magnesium (Mg), calcium (Ca), strontium (Sr), barium (Ba), and radium (Ra), which belong to Group II. It also includes manganese (Mn), cobalt (Co), nickel (Ni), iron (Fe), copper (Cu), and zinc (Zn), which form divalent metal ions. It may also include other metal elements than listed above.]

### <Nucleating agent excluding soluble azo lake pigments>

The nucleating agent as a constituent of the second resin composition mentioned above may be one excluding soluble azo lake pigments. This nucleating agent exists in the phase of polylactic acid resin constituting the resin composition of polylactic acid resin and polystyrene resin, so that it effectively crystallizes polylactic acid resin. An example of this nucleating agent is PY110, which is a polycyclic pigment represented by the structural formula (3) above.

Additional nucleating agents effective for polylactic acid resin may be selected without specific restrictions from the following candidates proposed so far. Metal salt of sulfonic acid having aromatic rings (disclosed in Japanese Patent Laid-open No. 2006-89587), salt of melamine compound (disclosed in Japanese Patent Laid-open No. 2005-2726791), salt of aromatic sulfonic acid (disclosed in PCT Patent Publication No. WO05/068554), amide compound (disclosed in Patent No. 3989406), amide compound (disclosed in Patent No. 3671547), exemplified by trimesic acid tris(t-butylamide), 1,4-cyclo-hexanedicarboxylic acid dianilide, 2,6-naphthalenedicarboxylic acid dicyclohexylamide, N,N'-dibenzoyl-1,4-diaminocyclohexane, and N,N'-dicyclohexanecarbonyl-1,5-diaminonaphthalene.

### <Amount of nucleating agent for resin>

The nucleating resin used in an embodiment of the present invention should be as small in particle size as possible. Specifically, the particle size should be no larger than about 10 µm, preferably no larger than about 1 µm, most desirably no larger than 0.1 µm. Such fine powder may be obtained by pulverizing coarse powder.

Pulverizing may be accomplished by any known method, such as mechanical one and chemical one. Mechanical pulverizing includes ball milling, salt milling, and freeze grinding. There are other methods that employ jet mill or air hammer. These methods are designed to cause particles and air streams to collide against each other. Chemical methods include recrystallization and spray drying. Recrystallization from a solvent solution gives rise to fine particles of nucleating agent. Recrystallization takes place due to difference in solubility depending on temperature when a hot saturated solution of nucleating agent is cooled. Recrystallization may also be achieved by evaporating solvent for concentration or by diluting a solution with another solvent to reduce solubility. Spray drying causes a solution of nucleating agent to spray for solvent evaporation.

According to an embodiment of the present invention, the resin composition should contain the nucleating agent in an amount of 0.001 to 10 pbw, preferably 0.01 to 3 pbw, for 100 pbw polylactic acid resin to be crystallized.

### <Polylactic acid>

Polylactic acid used in an embodiment of the present invention can be produced by any known method, such as lactide method, polycondensation of a polyhydric alcohol with a polybasic acid, and intermolecular polycondensation of hydroxycarboxylic acid having a hydroxyl group and a carboxyl group in the molecule.

Polylactic acid can be obtained usually by so-called latide method, which is based on ring-opening polymerization of lactide (such as a cyclic diester) or a lactone corresponding to it. Another method is direct dehydration condensation of lactic acid. Production of an aliphatic polyester of polylactic acid needs a catalyst such as tin, antimony, zinc, titanium, iron, and aluminum compound. A tin- or aluminum-based catalyst is preferable, such as tin octylate and aluminum acetylacetonate.

Poly L-lactic acid obtained by lactide ring-opening polymerization is most appropriate among all kinds of polylactic acid, because it is readily hydrolyzable into L-lactic acid and is proven to be safe. The polylactic acid used in an embodiment of the present invention is not limited to poly L-lactic acid, and the lactide used for its production is not limited to that of L form either.

The polylactic acid to be used in an embodiment of the present invention may be commercially available one, such as "Lacty" (from Shimadzu Seisakusho), "Raycia" (from Mitsui Kagaku), "Nature Works" (from Cargill Dow Polymer LLC), and "U'z" (from Toyota Motor).

### <Polycarbonate>

(See Japanese Patent Laid-open No. 2006-131828.)

The resin composition of an embodiment of the present invention may contain any polycarbonate resin as a constituent thereof. An adequate one is composed of repeating units represented by the general formula (3) below.

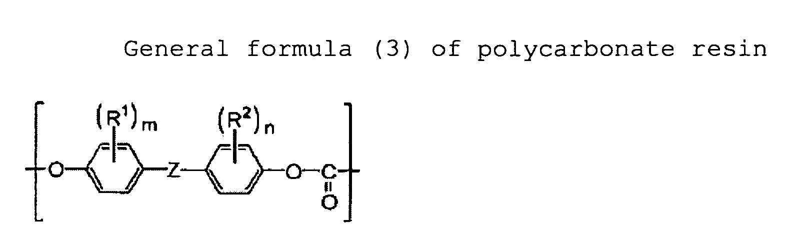

In the general formula (3) above, R¹ and R² denote a halogen atom (such as chlorine, fluorine, and iodine atoms) and a C1-8 alkyl group (such as methyl, ethyl, propyl, isopropyl, n butyl, isobutyl, sec-butyl, tert-butyl, pentyl, hexyl, heptyl, and octyl groups).

Reference symbols m and n denote an integer of 0 to 4. If m is 2 to 4, R¹ may be identical or different, and if n is 2 to 4, R² may be identical or different.

Reference symbol Z denotes a C1-8 alkylene group (such as methylene, ethylene, propylene, butylene, pentylene, and hexylene groups), a C2-8 alkylidene group (such as ethylidene and isopropylidene groups), a C5-15 cycloalkylene group (such as cyclopentylene and cyclohexylene groups), or a C5-15 cycloalkylidene group (such as cyclopentylidene and cyclohexylidene groups). It also denotes a single bond, a bond represented by -SO₂-, - SO-, -S-, -O-, and -CO-, or any other bond represented by the structural formula (7) or (8) below.

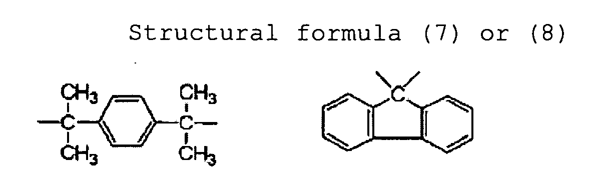

The above-mentioned polymer may be readily produced by reaction of a dihydric phenol (represented by the formula (4) below) with a carbonate precursor (such as phosgene). The reaction may be carried out in a solvent (such as methylene chloride) in the presence of any known acid acceptor and molecular weight modifier. It may also be produced by ester interchange between a dihydric phenol and a carbonate precursor (such as carbonic acid ester).

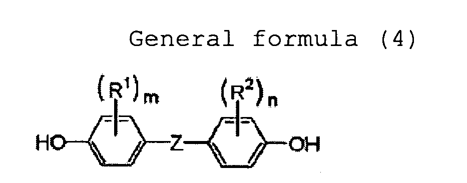

[where R¹, R², Z, m, and n are defined as in the general formula (3).]

The dihydric phenol represented by the general formula (4) should preferably be 2,2-bis(4-hydroxyphenyl)propane (commonly called bisphenol A). Examples of other dihydric phenols than bisphenol A include: bis(4-hydroxyphenyl)alkane, such as bis(4-hydroxyphenyl)methane, 1,1-bis(4-hydroxyphenyl)ethane, and 1,2-bis(4-hydroxyphenyl)ethane; bis(4-hydroxyphenyl)cycloalkane, such as 1,1-bis(4-hydroxyphenyl)cyclohexane and 1,1-bis(4-hydroxyphenyl)cyclodecane; 4,4'-dihydroxydiphenyl, bis (4-hydroxyphenyl)oxide, bis(4-hydroxyphenyl)sulfide, bis(4-hydroxyphenyl)sulfone, bis(4-hydroxyphenyl)sulfoxide, and bis(4-hydroxyphenyl)ketone. Additional dihydric phenols include hydroquinone. These dihydric phenols may be used alone or in combination with one another. Examples of the carbonic acid ester include diaryl carbonate (such as diphenyl carbonate) and dialkyl carbonate (such as diethyl carbonate).

The polycarbonate resin may be a homopolymer composed of one species of the above-mentioned dihydric phenol or a copolymer composed of two or more species of the above-mentioned dihydric phenol. It may also be a thermoplastic, randomly branched polycarbonate resin polymerized from a polyfunctional aromatic compound and a dihydric phenol mentioned above. The polyfunctional aromatic compound, which is generally called branching agent, includes 1,1,1-tris(4-hydroxyphenyl)ethane, α,α',α"-tris(4-hydroxyphenyl)-1,3,5-triisopropylbenzene, 1-[α-methyl-a-(4'-hydroxyphenyl)ethyl]-4-[α',α'-bis(4"-hydroxyphenyl)ethyl]benzene, phloroglucin, trimellitic acid, isatinbis(o-cresol).

The polycarbonate resin specified above may be selected from commercial aromatic polycarbonate resins sold under the trade name of "Taflon" FN3000A, FN2500A, FN2200A, FN1900A, FN1700A, and FN1500A (from Idemitsu Kousan).

### <Polystyrene resin>

(See Japanese Patent Laid-open No. Hei 2-173137.)

Polystyrene resin per se is known. It is a polymer containing more than 25 wt% of building blocks represented by the general formula (5) below.

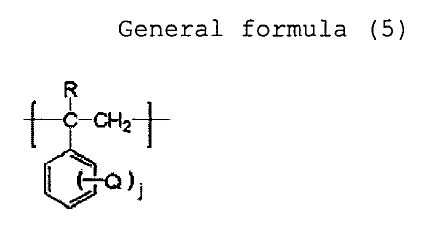

In general formula (5), R denotes a hydrogen atom or a C1-4 alkyl group, Q denotes a halogen atom or a C1-4 alkyl group (substituent), and j is an integer of 0 to 5. The polystyrene resin defined as above is a homopolymer or copolymer of styrene or derivatives thereof, such as p methylstyrene, α-methylstyrene, α-methyl-p-methylstyrene, chlorostyrene, and bromostyrene. The polystyrene resin may be used in combination with natural rubber or synthetic elastomer, such as polybutadiene, polyisoprene, butyl rubber, EPDM, ethylene-propylene copolymer, and epichlorohydrin rubber. The styrene copolymer includes styrene-acrylonitrile copolymer (SAN), styrene-butadiene copolymer, styrene-maleic anhydride copolymer, and acrylonitrile-butadiene-styrene copolymer (ABS). An adequate polystyrene resin for the present invention is at least one species selected from the group consisting of homopolystyrene, rubber-modified high-impact polystyrene, and polystyrene of syndiotactic structure.

Polystyrene of syndiotactic structure is known in itself. It denotes one which is characterized by the syndiotactic stereochemical structure. It should have syndiotacticity greater than 50% as determined by nuclear magnetic resonance.

The polystyrene resin used in an embodiment of the present invention should have a weight-average molecular weight no lower than 30000, preferably no lower than 50000. It may be used in combination with polyphenylene ether resin to provide a resin composition excelling in heat resistance, mechanical properties, flowability, and dimensional stability.

### <Additives>

The resin composition of an embodiment of the present invention may be incorporated with various additives, such as flame retardant, lubricant, wax, heat stabilizer, reinforcement, inorganic and organic filler, antioxidant, and Ultraviolet (UV) absorber.

The amount of additives is no less than 0.1 wt% and no more than 50 wt%, although not specifically restricted. An amount less than 0.1 wt% makes it too small to produce the desired effect, and an amount more than 60 wt% makes the resin composition poor in heat resistance, storage stability, moldability, and impact resistance.

### «Flame retardant»

The flame retardant includes those of phosphorus compounds, boron compounds, inorganic compounds, nitrogen compounds, halogen compounds, organic compounds, and colloid compounds, whose typical examples are listed below. They may be used alone or in combination with one another.

Boron compounds include zinc borate hydrate, barium metaborate, and borax.

Inorganic compounds include metal sulfate (such as zinc sulfate, potassium hydrogensulfate, aluminum sulfate, antimony sulfate, ester sulfate, potassium sulfate, cobalt sulfate, sodium hydrogensulfate, iron sulfate, copper sulfate, sodium sulfate, nickel sulfate, barium sulfate, and magnesium sulfate), ammonium sulfate, iron oxide (such as ferrocene), metal nitrate (such as copper nitrate), titanium compounds (such as titanium oxide), guanidine compounds (such as guanidine sulfamate), zirconium compounds, molybdenum compound, tin compounds, carbonates (such as potassium carbonate), and metal hydroxide (such as aluminum hydroxide and magnesium hydroxide), and their modified products.

Nitrogen compounds include cyanurate compounds having a triazine ring.

Halogen compounds include chlorinated paraffin, perchlorocyclopentadecane, hexabromobenzene, decabromodiphenyloxide, bis(tribromophenoxy)ethane, ethylene-bis-dibromonorbornanedicarboxyimide, ethylene-bis-tetrabromophthalimide, dibromoethyl-dibromocyclohexane, dibromoneopentylglycol, 2,4,6-tribromophenol, tribromophenylallyl ether, tetrabromobisphenol A derivative, tetrabromo-bisphnol S derivative, tetradecabromo-diphenylbenzene, tris-(2,3-dibromopropyl)-isocyanurate, 2,2-bis(4-hydroxy-3,5-dibromophenyl)propane, 2,2-bis(4-hydroxyethoxy-3,5-dibromophenyl)propane, poly(pentabromobenzylacrylate), tribromostyrene, tribromophenylmaleinide, tribromoneopentyl alcohol, tetrabromodipentaerythritol, pentabromobenzyl acrylate, pentabromophenol, pentabromotoluene, pentabromodiphenyloxide, hexabromocyclodecane, hexabromodiphenyl ether, octabromophenol ether, octadibromodiphenyl ether, octabromodiphenyloxide, magnesium hydroxide, dibromoneopentylglycol tetracarbonate, bis(tribromophenyl)fumaramide, N-methylhexabromophenylamine, styrene bromide, and diarylchlorendate.

Organic compounds include chlorendic anhydride, phthalic anhydride, bisphenol A-containing compounds, glycidyl compounds (such as glycidyl ether), polyhydric alcohols (such as diethylene glycol and pentaerythritol), modified carbamide, and silica compounds (such as silicone oil, silicon dioxide, low-melting glass, and organosiloxane).

Colloid compounds include hydroxides (such as aluminum hydroxide, magnesium hydroxide, and calcium hydroxide), calcium aluminate, gypsum dihydrate, zinc borate, barium metaborate, borax, kaolin clay, nitrates (such as sodium nitrate, molybdenum compounds, zirconium compounds, antimony compounds, dawsonite, and progopite.

The flame retardant should be one which does not emit any toxic gas at the time of incineration or disposal.

Those flame retardants which are preferable from the standpoint of environmental protection include hydroxides (such as aluminum hydroxide, magnesium hydroxide, and calcium hydroxide), phosphorus compounds, ammonium compounds (such as ammonium phosphate and ammonium polyphosphate), and silica compounds (such as silicon dioxide, low-melting glass, and organosiloxane).

Silica compounds as flame retardants should be those which contain more than about 50% of silicon dioxide. Originating from minerals that naturally occur, they contain a certain amount of MgO, CaO, Fe₂O₃, Al₂O₃, etc. Such impurities should be minimal to avoid their adverse effect on flame retardancy.

Hydroxide compounds as flame retardants should be those which have a purity higher than about 99.5%. High purity is desirable for the storage stability of the resin composition incorporated with the hydrolysis regulator mentioned later.

The purity of hydroxide compounds may be determined by any known method. Aluminum hydroxide, for example, contains Fe₂O₃, SiO₂, T-Na₂O, S-Na₂O, etc. as impurities. The content of Fe₂O₃ may be determined by dissolution in a solution of sodium carbonate and boric acid and ensuing O-phenanthroline absorptiometry (JIS H1901). The content of SiO₂ may be determined by dissolution in a solution of sodium carbonate and boric acid and ensuing molybdenum blue absorptiometry (JIS H1901).

The content of T-Na₂O may be determined by dissolution in sulfuric acid and ensuing flame photometry. The content of S-Na₂O may be determined by extraction with warm water and ensuing flame photometry. The purity of aluminum hydroxide is calculated by subtracting the thus determined amount of impurities from the weight of aluminum hydroxide sample. Aluminum hydroxide having a purity of 99.5% or above may be used in combination with other hydroxide flame retardants.

The above-mentioned flame retardant is not specifically restricted in shape; however, a spherical one is preferable. The particle diameter should be properly selected according to the type of flame retardant.

Flame retardants of silica compounds, such as SiO₂ and glass, should have an average particle diameter no larger than about 50 µm which is determined by laser diffraction. They are not restricted in particle size distribution.

Flame retardants of hydroxide compounds, such as Al(OH)₃, Mg(OH)₂, and Ca(OH)₂, should have an average particle diameter no larger than about 100 µm which is determined by laser diffraction. They are not restricted in particle size distribution.

The above-mentioned particle diameter of flame retardants is suitable for the resin composition that has good dispersion in mixing and injection molding. The smaller the particle diameter, the more desirable.

For higher loadings in the resin composition, it is recommended to use more than one kind of flame retardants in combination varying in average particle diameter.

Those flame retardants of hydroxide compound, such as Al(OH)₃, Mg(OH)₂, and Ca(OH)₂, should preferably have a BET specific surface area no larger than 5.0 m²/g determined by nitrogen gas adsorption method.

For higher loadings in the resin composition, it is recommended to use more than one kind of flame retardants of hydroxide compound in combination varying in BET specific surface area.

The flame retardants should have a BET specific surface area no larger than 5.0 m²/g from the standpoint of processability.

The loadings of flame retardants vary within a range suitable for the resin composition to exhibit satisfactory mechanical strength. In the case of hydroxide compound, such as Al (OH)₃, Mg(OH)₂, and Ca (OH)₂, it is about 5 to 50 wt%, preferably about 7.5 to 45 wt%, more preferably 10 to 40 wt%.

In the case of ammonium polyphosphate, such as (NH₄)₃(PhO₃ₙ₊₁)ₙ₊₂ (where n is a natural number), the loadings of flame retardants should be about 1 to 25 wt%, preferably about 2 to 20 wt%, more preferably 3 to 15 wt%.

In the case of silica compound, such as SiO₂ and glass, the loadings of flame retardants should be about 5 to 40 wt%, preferably 10 to 35 wt%, more preferably 15 to 30 wt%.

### <<Reinforcement material>>

The reinforcement material includes, for example, microglass beads, fiber (such as plant fiber and glass fiber), silicate (such as chalk, novoculite, quartz, asbestos, feldspar, mica, talk, and wollastonite), and kaolin.

The inorganic filler includes, for example, carbon, silicon dioxide, metal oxide fine particles (such as alumina, silica, magnesia, and ferrite), silicate (such as talk, mica, kaolin, and zeolite), barium sulfate, calcium carbonate, silicide (such as silicon nitride and silicon carbide), boride (such as carbon boride and nitrogen boride), fine particles (such as fullerene), and whiskers of calcium carbide, potassium titanate, calcium silicate, and aluminum borate.

The organic filler includes, for example, epoxy resin, melamine resin, urea resin, acrylic resin, polycarbonate resin, phenolic resin, polyimide resin, polyamide resin, polyester resin, and Teflon(R).

Carbon, silicon dioxide, and silicide are particularly suitable. The above-mentioned fillers may be used alone or in combination with one another.

### «Antioxidant»

The antioxidant includes those of phenol type, amine type, sulfur type, hydroquinone type, and quinoline type.

Phenolic antioxidants are hindered phenols, such as 2,6-di-t-butyl-p-cresol, 1,3,5-trimethyl-2,4,6-tris(3,5-di-t-butyl-4-hydroxybenzyl)benzene, 2,2'-methylenebis(4-methyl-6-t-butylphenyl), 4,4'-methylenebis(2,6-di-t-butylphenol), 4,4'-butylidenebis(3-methyl-6-t-butylphenol), and 1,6-hexanediol-bis[3-(3,5-di-t-butyl-4-hydroxyphenol)propionate, which are categorized as C2-10 alkylenediol-bis[3-(3,5-di-branched C3-6 alkyl-4-hydroxyphenyl)propionate]; triethyleneglycol-bis[3-(3-t-butyl-5-methyl-4-hydroxyphenyl)propionate], which is categorized as di- or trioxy C2-4 alkylenediol-bis[3-(3,5-di-branched C3-6 alkyl-4-hydroxyphenyl)propionate]; glycerinetris[3-(3,5-di-t-butyl-4-hydroxyphenyl)propionate], which is categorized as C3-8 alkanetriol-bis[3-(3,5-di-branched C3-6 alkyl-4-hydroxyphenyl)propionate]; pentaerythritoltetrakis[3-(3,5-di-t-butyl-4-hydroxyphenyl)propionate], which is categorized as C4-8 alkanetetraoltetrakis[3-(3,5-di-branched C3-6 alkyl-4-hydroxylphenyl)propionate]; and n-octadecyl-3-(4',5'-di-t-butylphenol)propionate, n-octadecyl-3-(4'-hydroxy-3',5'-di-t-butylphenol)propionate, stearyl-2-(3,5-di-t-butyl-4-hydroxyphenol)propionate, distearyl-3,5-di-t-butyl-4-hydroxybenzylphoshonate, 2-t-butyl-6-(3-t-butyl-5-methyl-2-hydroxybenzyl)-4-methylphenylacrylate, N,N'-hexamethylenebis(3,5-di-t-butyl-4-hydroxy-hydrocinamide), 3,9-bis{2-[3-(3-t-butyl-4-hydroxy-5-methylphenyl)propionyloxy]-1,1-dimethylethyl}-2,4,8,10-tetraoxaspiro[5,5]undecane, 4,4'-thiobis(3-methyl-6-t-butylphenol), and 1,1,3-tris(2-methyl-4-hydroxy-5-t-butylphenol)butane.

Amine-based antioxidants include phenyl-1-naphtylamine, phenyl-2-naphthylamine, N,N'-diphenyl-1,4-phenylenediamine, and N-phenyl-N'-cyclohexyl-1,4-phenylenediamine.

Phosphorus-based antioxidants include phosphite compounds, such as triisodecyl phosphite, triphenyl phosphite, trisnonylphenyl phosphite, diphenylisodecyl phosphite, phenyldiisodecyl phosphite, 2,2-methylenebis(4,6-di-t-butylphenyl)octyl phosphite, 4,4'-butylidenebis(3-methyl-6-t-butylphenyl)ditridecyl phosphite, tris(2,4-di-t-butylphenyl) phosphite, tris(2-t-butyl-4-methylphenyl) phosphite, tris(2,4-di-t-amylphenyl) phosphite, tris(2-t-butylphenyl) phosphite, bis(2-t-butylphenyl)phenyl phosphite, tris[2-(1,1-dimethylpropyl)-phenyl] phosphite, tris[2,4-(1,1-dimethylpropyl)-phenyl] phosphite, tris(2-cyclohexylphenyl) phosphite, and tris(2-t-butyl-4-phenylphenyl) phosphite; and phosphine compounds, such as triethylphosphine, tripropylphosphine, tributylphosphine, tricyclohexylphosphine, diphenylvinylphosphine, allyldiphenylphosphine, triphenylphosphine, methylphenyl-p-anicylphosphine, p-anicyldiphenylphorsphine, p-tridiphenylphosphine, di-p-anicylphenylphosphine, di-p tolylphenylphosphine, tri-m-aminophenylphosphine, tri-2,4-dimethylphenylphosphine, tri-2,4,6-trimethylphenylphosphine, tri-o-tolylphosphine, tri-m-tolylphosphine, tri-p-tolylphosphine, tri-o-anicylphosphine, tri-p-anicylphosphine, and 1,4-bis(diphenylphosphino)butane.

Hydroquinone-based antioxidants include 2,5-di-t-butylhydroquinone.

Quinoline-based antioxidants include, for example, 6-ethoxy-2,2,4-trimethyl-1,2-dihydroxyquinoline.

Sulfur-based antioxidants include, for example, dilaurylthiopropionate and distearylthiodipropionate.

Preferable among the above-mentioned antioxidants are phenolic antioxidants, particularly hindered phenols, such as polyol-poly[(branched C3-6 alkyl group- and hydroxyl group-substituted phenyl)propionate].

The above-mentioned antioxidants may be used alone or in combination with one another.

### «Heat stabilizers»

Heat stabilizers include, for example, basic nitrogen-containing compounds (such as polyamide, poly-β-alanine copolymer, polyacrylamide, polyurethane, melamine, cyanoguanidine, and melamine-formaldehyde condensate), metal salt of organic carboxylic acid (such as calcium stearate and calcium 12-hydroxystearate), metal oxides (such as magnesium oxide, calcium oxide, and aluminum oxide), metal hydroxide (such as magnesium hydroxide, calcium hydroxide, and aluminum hydroxide), alkali metal-containing compound and alkaline earth metal-containing compounds (such as metal carbonate), zeolite, and hydrotalcite.

Preferable among the foregoing examples are alkali metal-containing compounds and alkaline earth metal-containing compounds (particularly magnesium compounds and calcium compounds), zeolite, and hydrotalcite.

The heat stabilizers mentioned above may be used alone or in combination with one another.

### «UV light absorbers»

UV light absorbers include known ones of benzophenone, benzotriazole, cyanoacrylate, salicylate, and oxalic anilide.

Their specific examples are listed below. [2-hydroxy-4-(methacryloylethoxy)benzophenone]-methyl methacrylate copolymer, [2-hydroxy-4-(methacryloyloxymethoxy)benzophenone]-methyl methacrylate copolymer, [2 hydroxy-4-(methacryloyloxyoctoxy)benzophenone]-methyl methacrylate copolymer, [2-hydroxy-4-(methacryloyloxydodecyloxy)benzophenone]-methyl methacrylate copolymer, [2 hydroxy-4-(methacryloyloxybenzyloxy)benzophenone]-methyl methacrylate copolymer, [2,2'-dihydroxy-4-(methacryloyloxyethoxy)]benzophenone]-methyl methacrylate copolymer, [2,2'-dihydroxy-4-(methacryloyloxymethoxy)benzophenone]-methyl methacrylate copolymer, and [2,2'-dihydroxy-4-(methacryloyoxyoctoxybenzophenone)-methyl methacrylate copolymer.

The UV light absorbers mentioned above may be used alone or in combination with one another.

### <<Lubricant>>

Examples of lubricants are listed below. Petroleum lubricating oil (such as liquid paraffin), synthetic lubricating oil (such as halogenated hydrocarbon, diester oil, silicone oil, and fluorosilicone), modified silicone oil (such as epoxy-modified one, amino-modified one, alkyl-modified one, and polyether-modified one), silicone-based lubricating oil (such as polyoxyalkylene glycol, which is a copolymer of silicone with an organic compound), silicone copolymer, fluorine-based surfactant (such as fluoroalkyl compound), fluorine-based lubricant (such as trifluoromethylene chloride oligomer), wax (such as paraffin wax and polyethylene wax), higher aliphatic alcohol, higher aliphatic amide, higher aliphatic ester, higher fatty acid salt, and molybdenum disulfide.

Preferable among the foregoing examples is silicone copolymer (formed by block- or graft-copolymerization of silicone with a resin).

Preferred silicone copolymers are block- or graft-copolymer of silicone with any of acrylic resin, polystyrene resin, polynitrile resin, polyamide resin, polyolefin resin, epoxy resin, polybutyral resin, melamine resin, vinyl chloride resin, polyurethane resin, and polyvinyl ether resin.

The lubricants listed above may be used alone or in combination with one another.

Examples of waxes include olefin wax (such as polypropylene wax and polyethylene wax), paraffin wax, fishertropush wax, microcrystalline wax, montan wax, aliphatic amide wax, higher aliphatic alcohol wax, higher aliphatic acid wax, aliphatic ester wax, carnauba wax, and rice wax.

The waxes listed above may be used alone or in combination with one another.

### «Coloring agent»

Examples of coloring agents include inorganic pigments, organic pigments, and dyes. These pigments may be added for coloring according to need.

### <<Hydrolysis inhibitor>>

Polylactic acid resin is a hydrolyzable resin. It is subject to hydrolysis by moisture in air, and it gradually decreases in molecular weight as hydrolysis proceeds. Decreased molecular weight aggravates mechanical properties such as impact resistance and heat resistance. Therefore, it should be protected against hydrolysis, and hence it should be incorporated with a hydrolysis inhibitor.

The hydrolysis inhibitor includes, for example, carbodiimide compounds, isocyanate compounds, and oxazoline compounds. Carbodiimide is particularly preferable because it can be incorporated into a polylactic acid resin by melt mixing and its incorporation in a small quantity prevents hydrolysis.

A carbodiimide compound is a compound which has at least one carbodiimide group in the molecule, and it also includes polycarbodiimide compounds. Monocarbodiimide compounds include dicyclohexylcarbodiimide, diisopropylcarbodiimide, dimethylcarbodiimide, diisobutylcarbodiimide, dioctylcarbodiimide, diphenylcarbodiimide, and naphthyl-carbodiimide. Preferable among these examples are dicyclohexylcarbodiimide and diisopropylcarbodiimide which are commercially available.

Examples of isocyanate compounds include 2,4-tolylenediisocyanate, 2,6-tolylenediisocyanate, m-phenylenediisocyanate, p-phenylenediisocyanate, 4,4'-diphenylmethanediisocyanate, 2,4'-diphenylmethanediisocyanate, 2,2'-diphenylmethanediisocyanate, 3,3'-dimethyl-4,4'-biphenylenediisocyanate, 3,3'-dimethoxy-4,4'-biphenylenediisocyanate, 3,3'-dichloro-4,4'-biphenylenediisocyanate, 1,5-naphthalenediisocyanate, 1,5-tetrahydronaphthalenediisocyanate, tetramethylenediisocyanate, 1,6-hexamethylenediisocyanate, dodecamethylenediisocyanate, trimethylhexamethylenediisocyanate, 1,3-cyclohexylenediisocyanate, 1,4-cyclohexylenediisocyanate, xylylenediisocyanate, tetramethylxylylenediisocyanate, hydrogenated xylylenediisocyanate, lysinediisocyanate, isohoronediisocyanate, 4,4'-dicychloro-hexylmethanediisocyanate, and 3,3'-dimethyl-4,4'-dicyclohexylmethanediisocyanate.

Examples of oxazoline compounds include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenbis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

The hydrolysis inhibitor mentioned above can be readily produced by any known method and any commercial one can be used.

The hydrolysis inhibitor causes the resin composition to hydrolyze at varied rates depending on its kind and amount added. The kind and amount should be properly adjusted according to the resin composition. Specifically, the amount of the hydrolysis inhibitor for the total amount of the resin composition should be no more than about 5 mass%, preferably no more than about 1 mass%. The hydrolysis inhibitors mentioned above may be used alone or in combination with one another.

### <Various kinds of treatment>

The resin composition of an embodiment of the present invention may undergo any one of known treatments.

For example, for protection of polylactic acid from hydrolysis, the resin composition may be irradiated with active energy rays, such as electromagnetic waves, electron beams, and particle rays, and combination thereof.

Electromagnetic waves include ultraviolet light and X-rays, and particle rays include those of protons, neutrons, and other elementary particles. Irradiation with electron rays generated by an electron accelerator is preferable.

Irradiation with active energy rays may be accomplished by using any known apparatus, such as UV irradiator and electron accelerator. The dosage and intensity of irradiation are not specifically restricted so long as they effectively retard the hydrolysis of polylactic acid. In the case of electron rays, the accelerating voltage is about 100 to 5000 kV, and the dosage is no lower than about 1 kGy.

### <Applications>

The resin composition of an embodiment of the present invention will find use in the areas of moldings.

Typical application areas include molded enclosures of electric appliances exemplified by audio visual (AV) equipment of stand alone type (such as digital versatile disc (DVD) player, compact disc (CD) player, and amplifier), speakers, on-vehicle AV equipment, on-vehicle information telecommunication (IT) equipment, portable information terminal (PDA) (such as electronic books), video tape recorder (VTR), television (TV), projector, television receiver, digital video camera, digital still camera, printer, radio, radio cassette, system stereo, microphone, headphone, keyboard, portable music instrument (such as headphone stereo), personal computer, and peripherals of personal computer.

Application areas also include parts constituting electric appliances and their packages. They also include the interior trim of automobiles.

### <Method for production of moldings>

The resin composition of an embodiment of the present invention may be made into moldings by blow molding, film formation, extrusion molding, injection molding, and the like. Injection molding is particularly desirable.

Specifically, extrusion molding may be accomplished in the usual way by using any known extrusion molding machine, such as single-screw extruder, multi-screw extruder, and tandem extruder.

Also, injection molding may be accomplished in the usual way by using any known injection molding machine, such as in-line screw injection molding machine, multilayer injection molding machine, and two-head injection molding machine.

### <Applications of molded products of resin composition>

Applications of molded products of resin composition include electric machines (such as dynamo, motor, transformer, current transformer, voltage regulator, rectifier, inverter, relays, electric power contact, switch, and breaker), electric parts (such as knife switch, multiple pole rod, cabinet, light socket, terminal boards, plug, and power module), sensor, light-emitting diode (LED) lamp, connector, resistor, relay case, small switch, coil bobbin, capacitor, variable capacitor case, optical pickup, oscillator, transducer, printed circuit board, tuner, speaker, microphone, head phone, storage device (such as floppy disc(R) (FD) and optomagnetic disc(R)), small motor, magnetic head base, semiconductor, liquid crystal, FD drive carriage, FD drive chassis, printers (such as ink jet printer and thermal transfer printer), printer ink case, motor brush holder, parabolic antenna, computer-related electronic parts, VTR parts, television parts, enclosures of electric or electronic machines (such as television and personal computer), iron, hair dryer, rice boiler parts, electronic oven parts, audio equipment, audio equipment parts (such as audio disc, laser disc(R) (LD), and CD), illumination parts, refrigerator parts, air conditioner parts, typewriter parts, word processor parts, office computer parts, telephone parts, facsimile parts, copying machine parts, cleaning jig, motor parts, lighter, typewriter parts, microscope, binocular, camera, watch, alternator terminal, alternator connector, integrated circuit (IC) regulator, potentiometer base for light dayer, exhaust gas valve, fuel pipe, exhaust pipe, intake pipe, air intake snorkel, intake manifold, fuel pump, engine coolant joint, carburetor main body, carburetor spacer, exhaust gas sensor, coolant sensor, oil temperature sensor, brake pad wear sensor, throttle position sensor, crank shaft position sensor, air flow meter, brake pad wear sensor, air conditioner thermostat base, heating air flow control valve, radiator motor brush holder, water pump impeller, turbine vane, wiper motor parts, distributor, starter switch, starter relay, transmission wire harness, window washer nozzle, air conditioner panel switch board, coil of magnetic valve for fuel supply, fuse connector, horn terminal, insulating plates for electric equipment, step motor rotor, lamp socket, lamp reflector, lamp housing, brake piston, solenoid bobbin, engine oil filter, ignition system casing, and other automotive parts and their packaging materials.

Additional examples include protective casing for the foregoing electric equipment. Some of them are listed below. A water-proof case (so-called marine case) that encloses a nonwaterproof digital camera, thereby allowing its use in an environment of water splash. Enclosures for transportation and storage of electric equipment. Information recording media such as optical disc (LD, CD, DVD, HD-DVD(R), Blu-ray Disc(R), MiniDisc(R), and optomagnetic disc. Casing (or so-called jewel case) to store them. Gear, gear shaft, bearing, rack, pinion, cam, crank, crank arm, wheel, and other machine and mechanism parts.

Other applications include automotive parts and their packaging materials, such as on-vehicle electric and electronic equipment mentioned above, alternator terminal, alternator connector, IC regulator, light dayer potentiometer base, exhaust valve and other valves, fuel pipe, exhaust pipe, intake pipe, air intake nozzle snorkel, intake manifold, fuel pump, engine coolant joint, carburetor main body, carburetor spacer, exhaust gas sensor, coolant sensor, oil temperature sensor, brake pad wear sensor, throttle position sensor, crankshaft position sensor, air flow meter, brake pad wear sensor, air conditioner thermostat base, heater air flow control valve, radiator motor brush holder, water pump impeller, turbine vane, wiper motor parts, distributor, starter switch, starter relay, transmission wire harness, wind washer nozzle, air conditioner switch board, coil of magnetic valve for fuel supply, fuse connector, horn terminal, insulating plates for electric equipment, step motor rotor, lamp socket, lamp reflector, lamp housing, brake piston, solenoid bobbin, engine oil filter, and ignition system casing.

The preferred embodiment of the present invention will be described below with reference to the accompanying drawings.

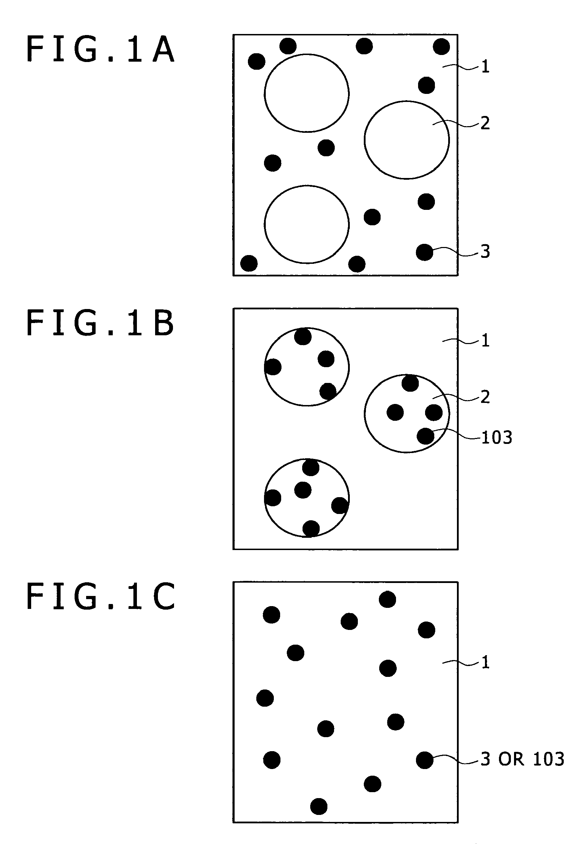

Fig. 1A is a schematic diagram showing the structure of the resin composition pertaining to the embodiment of the present invention. As mentioned above, organic polymer resins of different kinds are usually immiscible with each other. Polylactic acid resin is immiscible with polycarbonate resin, polystyrene resin, polyacetal resin, acrylonitrile-butadiene-styrene copolymer (ABS) resin, polyamide resin, and amorphous polyolefin resin. When polylactic acid resin is mixed by melting with the above-mentioned resin (called heat-resistant resin for short hereinafter) which is superior in heat resistance to it but is incompletely miscible with it, the resulting mixture consists of mutually separated two phases as shown in Fig. 1A, in which phase 1 represents polylactic acid resin and phase 2 represents the heat-resistant resin.

The composite material consisting of two resins in the form of mutually separated phases is characterized in that a crystal nucleating agent added thereto exists in either of the separated phases. In which phase the nucleating agent exists depends on such factors as hydrophile-lipophile balance (HLB), solubility parameter (SP value), acidity and basicity (see DIC Technical Review No. 5/1999, issued by Dai-Nippon Ink Chemicals Co., Ltd).

This situation is depicted in Fig. 1A, in which numeral 3 denotes the nucleating agent compatible with polylactic acid resin which exists in phase 1 of polylactic acid resin, as indicated by microscopic observation mentioned later. The nucleating agent is PY191 or PR48, which is a soluble azo lake pigment that effectively promotes crystallization of polylactic acid resin. The foregoing holds true for the composite material of polylactic acid resin and polystyrene resin, in which the nucleating agent 3 is PY110, which is a polycyclic pigment. Microscopic observation indicates that PY110 takes on the structure shown in Fig 1A and exists in the phase 1 of polylactic acid resin. In this situation, PY110 effectively promotes crystallization of polylactic acid resin.

By contrast, Fig. 1B is a schematic diagram showing the structure of the resin composition containing a crystal nucleating agent not effective for polylactic acid resin combined with a plastic resin superior in heat resistance to polylactic acid resin. It is to be noted that the nucleating agent 103 promotes crystallization of polylactic acid resin when added to it (as a simple substance) but does not when added to a resin composition of it and a heat-resistant resin. Microscopic observation (mentioned later) indicates that the nucleating agent 103 is compatible with a heat-resistant resin and hence exists in it and rarely exists in the phase 1 of polylactic acid resin.

It is concluded from the foregoing that the nucleating agent 103 does not promote crystallization of polylactic acid resin of the resin composition because it is caught by the heat-resistant resin. In other words, the polylactic acid resin of the resin composition will be adequately crystallized if the resin composition is incorporated with a nucleating agent which promotes crystallization of polylactic acid resin and exists at least in polylactic acid resin.

The following reasoning will be made on the assumption that the different behavior of the nucleating agents 3 and 103 is due to HLB.

Polylactic acid resin is comparatively highly polarized in polymer chains and is strongly hydrophilic (or has a high HLB value), whereas the heat-resistant resin is less polarized in polymer chains than polylactic acid resin and is strongly lipophilic (or has a low HLB value). The low polarization in polymer chains is due to benzene rings in the case of polycarbonate resin, polystyrene resin, and acrylonitrile-butadiene-styrene copolymer (ABS) resin, or due to symmetric polymer chains in the case of polyacetal resin, polyamide resin, and amorphous polyolefin resin.

Unlike the heat-resistant resin, the soluble azo lake pigment is a salt and has an ionic structure in which electric charges are separated. Hence, it is strongly hydrophilic and highly compatible with the polylactic acid resin having a large HLB value. As the result, the nucleating agent exists in the polylactic acid resin. Examples of the nucleating agent 103 include PY109 (represented by the structural formula (9) below), PR169 (represented by the structural formula (10) below), and PR254 (1,4-diketo-2,5-dihydro-3,6-di-(p-chlorophenyl)pyrrolo[3,4-c]pyrrole). These nucleating agents are effective when used for polylactic acid resin alone; however, when used for a resin composition of polylactic acid resin and a heat-resistant resin, they exist mostly in the latter's phase because they are less polar, strongly lipophilic, low in HLB value, and highly compatible with the heat-resistant resin.

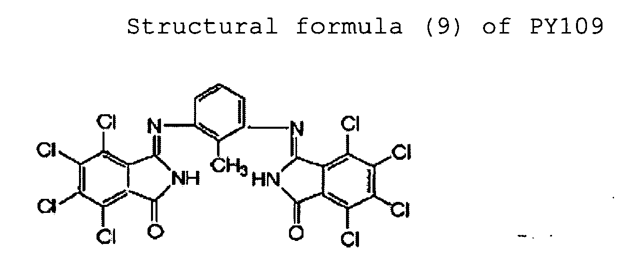

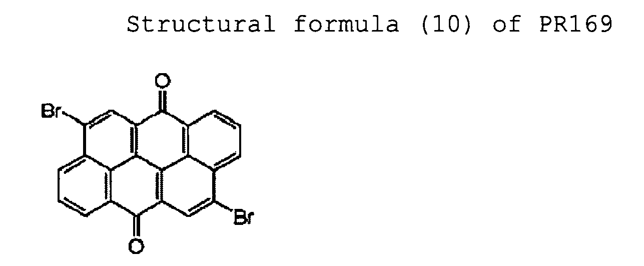

Fig. 1C is a schematic diagram showing the structure of polylactic acid resin containing a crystal nucleating agent (3 or 103). In this case, the nucleating agent is dispersed in the phase of polylactic acid resin, and hence it effectively promotes crystallization of polylactic acid resin.

### [EXAMPLES]

The following deals with Examples of the present invention in which resin compositions containing the nucleating agent 3 are actually prepared and Comparative Examples in which resin compositions containing nucleating agent 103 in place of nucleating agent 3 are prepared.

### (Example 1)

### <Preparation of resin composition>

A resin composition is made from polylactic acid resin ("H100" from Mitsui Chemical), polycarbonate resin as a heat-resistant resin ("Panlite L-1225LL" from Teijin Kasei), and soluble azo lake pigment PY191 as a nucleating agent for polylactic acid resin ("PV Fast Yellow HGR" from Clariant Japan).

Polylactic acid resin (60 pbw), polycarbonate resin (40 pbw), and PY191 (3 pbw) are mixed by heating and melting to prepare the resin composition. Melt-mixing is accomplished by using Minimax-Mixruder (from Toyo Seiki), with the nozzle temperature kept at 230°C.

### <Measurement by DSC>

The resin composition is examined for crystallization characteristics by differential scanning calorimetry (DSC) that determines its crystallizing peak temperature. Specifically, DSC is carried out by heating a sample of resin composition (3 to 4 mg) placed in an aluminum pan up to 230°C and then cooling down to 60°C at a rate of 20°C/min. The peak of heat generation due to crystallization that is observed in the neighborhood of 100 to 140°C is regarded as the crystallizing peak temperature, which is a measure that indicates the effectiveness of the nucleating agent. The fact that a sample has a high crystallizing peak temperature means that the nucleating agent starts crystallization while the chains of polylactic acid are actively moving at a high temperature and crystallization proceeds fast in a large region before the chains of polylactic acid become motionless. It follows, therefore, that the higher the crystallizing peak temperature, the more effective the nucleating agent (for more detail about DSC, refer to Japanese Patent Laid-open No. 2004-352873, Paragraph [0091], PCT Publication No. WO05/068554, Paragraphs [0060] and onward, and Japanese Patent Laid-open No. 2005-264147, Paragraph [0112]). A high crystallizing peak temperature, which means that crystallization takes place at a high temperature, is desirable for injection molding, in which the resin composition is crystallized while the temperature is gradually going down.

### <Observation under optical microscope>

The resin composition is observed under an optical microscope to locate the nucleating agent therein in the following manner. A small amount of sample is placed on a thin glass plate (about 0.1 mm thick), heated to 230°C on a hot stage, and pressed down with a thin cover glass. The thus prepared specimen is photographed by a CCD video camera (1/3 inch black/white) equipped with an object lens of 10 magnification. An area of 600 × 450 µm is recorded and digitized with a resolution of 640 × 480 pixels and 10 bits.

A composite material composed of mutually immiscible resin A and resin B will contain resin A in the form of continuous phase when either of the following relations hold.

(Ratio in volume of resin A)/(viscosity of resin A) is larger than (ratio in volume of resin B)/(viscosity of resin B).

(Amount by mass of resin A)/(specific gravity of resin A × viscosity of resin A) is larger than (amount by mass of resin B)/(specific gravity of resin B × viscosity of resin B).

If difference in specific gravity and viscosity is small between resin A and resin B, the ratio by mass of the two resins is important. It is considered in Example 1 that polylactic acid resin accounts for a larger portion and hence forms the continuous phase (sea) and polycarbonate resin forms the isolated phase (island).

Whether the polylactic acid resin forms the continuous phase or isolated phase can be experimentally confirmed by observation under a polarization microscope, because the crystallized polymer looks bright due to its birefringence and the amorphous polymer looks dark due to its isotropy. Therefore, observation under a polarization microscope differentiates the phase of polylactic acid resin from the phase of amorphous polycarbonate resin or polystyrene resin. In this way, it is proved that the resin composition in Example 1 (and other examples of the present invention) contains polylactic acid resin as a continuous phase.

The nucleating agent in the resin composition according to this example can be readily located by observation under an optical microscope because it is a pigment and it absorbs light of specific wavelength. A microscopic image of white light recognized by unaided eyes or color photographs reveals the presence of the pigment in the phase because the phase containing the pigment is colored by the pigment and the phase not containing the pigment looks white or bright. A monochromatic photograph through a microscope indicates the presence of the nucleating agent if the microscope employs illuminating light of specific wavelength that is easily absorbed by the pigment, because the phase containing the pigment looks very dark and the phase not containing the pigment looks bright. In this way it is possible to know which phase contains the nucleating agent.

### (Example 2)

The procedure of Example 1 is repeated to prepare a resin composition, except that the nucleating agent for polylactic acid resin is replaced by PR48:4, which is a soluble azo lake pigment, manganese salt, ("Symuler Red 3037" from Dai-Nippon Ink and Chemicals). The resin composition is examined for crystallization peak temperature by DSC and is observed under an optical microscope.

### (Comparative Example 1)

The procedure of Example 1 is repeated to prepare a resin composition, except that the nucleating agent for polylactic acid resin is replaced by PY109, which is not a soluble azo lake pigment but promotes crystallization of polylactic acid resin ("Symuler Fast Yellow 4059G" from Dai-Nippon Ink and Chemicals) (see Patent Document 1). The resin composition is examined for crystallization peak temperature by DSC and is observed under an optical microscope.

### (Examples 11 to 13)

In Examples 11 and 12, the procedure of Example 1 is repeated to prepare resin compositions, except that the polycarbonate resin as the heat-resistant resin is replaced by polystyrene resin. The resin compositions are examined for crystallization peak temperature by DSC and are observed under an optical microscope. In Example 13, the procedure of Example 1 is repeated to prepare a resin composition, except that the nucleating agent for polylactic acid resin is replaced by PY110, which is a polycyclic pigment PY100 ("Cromophtal Yellow 2RLP" from Ciba Fine Chemicals). The resin composition is examined for crystallization peak temperature by DSC and is observed under an optical microscope.

### (Comparative Example 11)

The procedure of Example 11 is repeated to prepare a resin composition, except that the nucleating agent is replaced by PY109. The resin composition is examined for crystallization peak temperature by DSC and is observed under an optical microscope.

### (Reference Examples 1 to 4)

The procedure of Example 1 is repeated to prepare a resin composition, except that the polylactic acid resin each is incorporated with 3 pbw of PY191, PR48:4, PY110, and PY109. The resin composition is examined for crystallization peak temperature by DSC.

The results of Examples and Comparative Examples are summarized in Tables 1 and 2 which show the make-up of the resin composition, the resin phase in which the nucleating agent is present, and the crystallization peak temperature. The results of Reference Examples are summarized in Table 3 which shows the make-up of the resin composition, the crystallization peak temperature, and exothermic enthalpy.

**[Table 1]**

| | Resin | | Nucleating agent | Resin phase in which nucleating agent is present | Crystallization peak temperature | Judgment |
|---|---|---|---|---|---|---|
| | 60 pbw | 40 pbw | 3 pbw | | | |
| Example 1 | Polylactic acid | Polycarbonate | PY191 | Phase of polylactic acid | 126.5°C | o |
| Example 2 | Polylactic acid | Polycarbonate | PR48:4 | Phase of polylactic acid | 121.0°C | o |
| Comparative Example 1 | Polylactic acid | Polycarbonate | PY109 | Phase of polycarbonate resin | 110.2°C | × |

**[Table 2]**

| | Resin | | Nucleating agent | Resin phase in which nucleating agent is present | Crystallization peak temperature | Judgment |
|---|---|---|---|---|---|---|
| | 60 pbw | 40 pbw | 3 pbw | | | |
| Example 11 | Polylactic acid | Polystyrene | PY191 | Phase of polylactic acid | 125.3°C | o |
| Example 12 | Polylactic acid | Polystyrene | PR48:4 | Phase of polylactic acid | 121.0°C | o |
| Example 13 | Polylactic acid | Polystyrene | PY110 | Phase of polylactic acid | 135.4°C | o |
| Comparative Example 11 | Polylactic acid | Polystyrene | PY109 | Phase of polystyrene resin | 110.5°C | × |

**[Table 3]**

| | Resin | Nucleating agent | Crystallization peak temperature | Exothermic enthalpy | Judgment |
|---|---|---|---|---|---|
| | 100 pbw | 3 pbw | | | |
| Reference Example 1 | Polylactic acid | PY191 | 128.6°C | 42.9 J/g | o |
| Reference Example 2 | Polylactic acid | PR48:4 | 121.0°C | 36.9 J/g | o |
| Reference Example 3 | Polylactic acid | PY110 | 136.2°C | 44.0 J/g | o |
| Reference Example 4 | Polylactic acid | PY109 | 120.7°C | 41.5 J/g | o |

Reference Examples shown in Table 3 are intended to evaluate various nucleating agents to promote crystallization of polylactic acid resin. Any sample which gave the crystallization peak temperature higher than 120°C is rated as good. As mentioned above, the nucleating agent is effective in proportion to the crystallization peak temperature; however, it is also desirable for the nucleating agent to start crystallization at a high temperature in the case of injection molding that causes crystallization to proceed while temperature is decreasing. Any sample of nucleating agent is also rated as good if it gives a peak higher than 23 J/g in exothermic enthalpy per unit mass of polylactic acid component at 100 to 150°C (measured by DSC). The amount of exothermic enthalpy due to crystallization represents the amount of crystallization. All the nucleating agents are rated as "o" or practically useful as indicated in Table 3.

Examples 1 and 2 and Comparative Example 1 shown in Table 1 demonstrate respectively the effect of PY191, PR48:4, and PY109 added to the resin composition of polylactic acid resin and polycarbonate resin. Examples 11, 12, and 13 and Comparative Example 11 shown in Table 2 demonstrate respectively the effect of PY191, PR48:4, PY110, and PY109 added to the resin composition of polylactic acid resin and polystyrene resin.

The effect of PY109 is poorer in Comparative Examples 1 and 11 than in Reference Example 4 as indicated by the lower crystallization peak temperature. By contrast, the effect of PY191 in Examples 1 and 11 is at almost the same level as that in Reference Example 1 as indicated by only a little decrease in crystallization peak temperature. The effect of PR48:4 in Examples 2 and 12 is the same as that in Reference Example 2 as indicated by no decrease in crystallization peak temperature. The effect of PY110 in Example 13 is almost the same as that in Reference Example 3 as indicated by only a slight decrease in crystallization peak temperature.

The nucleating agent is rated as "o" or practically useful (in the judgment column of Tables 1 and 2) if it gives the crystallization temperature higher than 120°C, which is a measure that indicates the effect of nucleating agent for polylactic acid resin in its resin composition. PY191 and PR48:4, which are soluble azo lake pigments, are rated as good, whereas PY109, which is not a soluble azo lake pigment, is rated as poor. However, PY110, which is not a soluble azo lake pigment but is a polycyclic pigment, is rated as good.

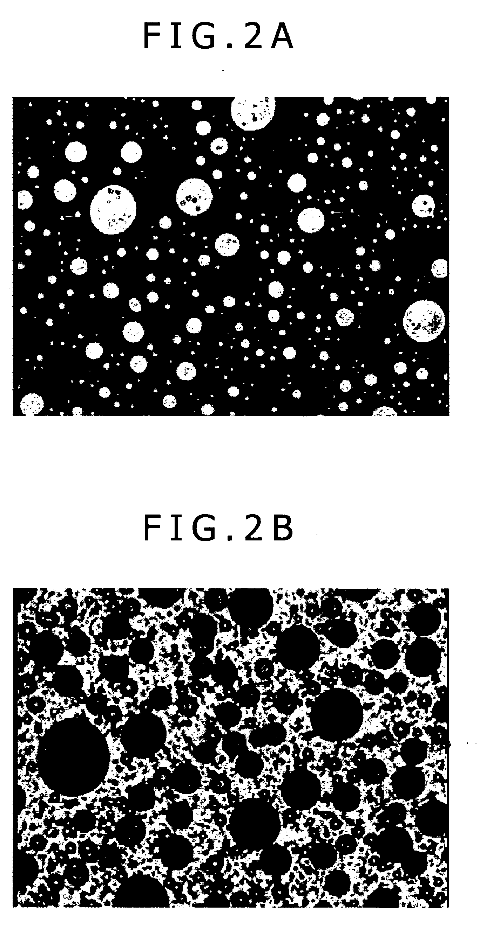

Fig. 2A is a microphotograph showing the resin composition pertaining to Example 1. The dark area in the photograph represents the continuous phase, and hence it is noted that the nucleating agent PY191 exists in the continuous phase or the phase of polylactic acid resin. Although microphotographs are omitted, it is found that the nucleating agents PR48:4 and PY110 also exist in the continuous phase or the phase of polylactic acid resin. On the other hand, Fig. 2B is a microphotograph showing the resin composition pertaining to Comparative Example 1. The dark area in the photograph represents the isolated phase, and hence it is noted that the nucleating agent PY109 exists in the phase of polycarbonate resin. Although micro-photographs are omitted, it is found that the nucleating agent PY109 in the resin composition of Comparative Example 11 exists in the isolated phase or the phase of polystyrene resin. As shown above, any nucleating agent that exists in the phase of polylactic acid resin of a resin composition effectively promotes crystallization of polylactic acid resin in the resin composition. Also, any nucleating agent that exists in the phase of polycarbonate resin or polystyrene resin of a resin composition effectively promotes crystallization of polylactic acid resin in the resin composition.

Any nucleating agent adequately selected according to an embodiment of the present invention effectively promotes crystallization of polylactic acid resin in a resin composition of polylactic acid resin and a resin superior in heat resistance to polylactic acid resin. Such a nucleating agent is used to improve the heat resistance of polylactic acid resin through crystallization or combination with other resin, and the thus improved polylactic acid resin is used for enclosures and packages of electric appliances, particularly those which generate heat during operation. It also reduces cost and time of crystallization, thereby contributing to productivity.

The invention has been described above according to the embodiments and examples, and it may be modified and changed variously within the scope thereof.

The present invention provides a means that promotes crystallization of polylactic acid resin in a resin composition of polylactic acid resin and a resin superior in heat resistance to polylactic acid resin, and hence improves the heat resistance of the resin composition and expands the area to which polylactic acid resin is applied.

## Claims

1. A resin composition which comprises polylactic acid resin, a plastic resin superior in heat resistance to said polylactic acid resin, and a nucleating agent that promotes crystallization of said polylactic acid resin, with said nucleating agent being a soluble azo lake pigment.

2. The resin composition as defined in claim 1, wherein the plastic resin superior in heat resistance to said polylactic acid resin is one which has a flexural modulus of elasticity no lower than 1000 MPa at 80°C.

3. The resin composition as defined in claim 2, wherein the plastic resin which has a flexural modulus of elasticity no lower than 1000 MPa at 80°C is at least one species selected from the group consisting of polycarbonate resin, polystyrene resin, polyacetal resin, acrylonitrile-butadiene-styrene copolymer resin, polyamide resin, and amorphous polyolefin resin.

4. The resin composition as defined in claim 1, wherein the soluble azo lake pigment is a first one represented by the structural formula (1) below or a second one represented by the structural formula (2) below. 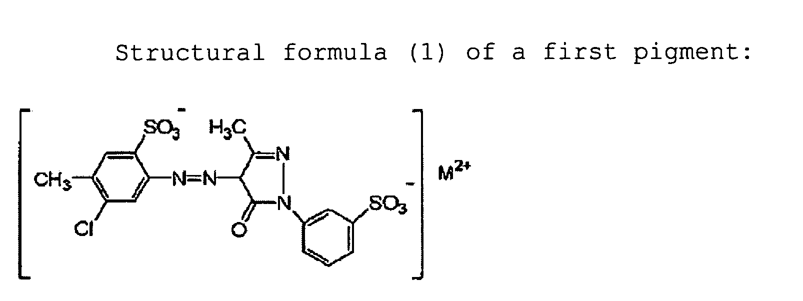 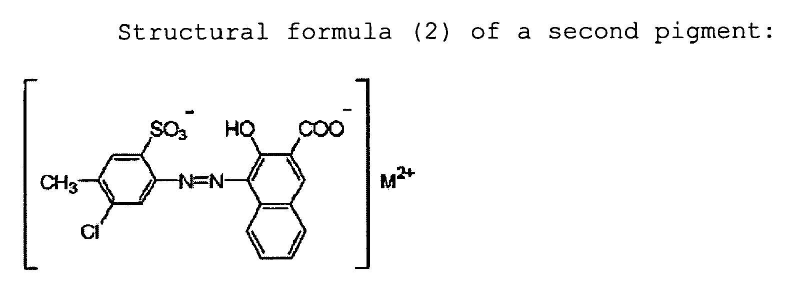 [where M²⁺ denotes a divalent metal ion.]

5. A resin composition which comprises polylactic acid resin, a plastic resin superior in heat resistance to said polylactic acid resin and incompletely miscible with said polylactic acid resin, and a nucleating agent that promotes crystallization of said polylactic acid resin, with said nucleating agent being present at least in the phase of polylactic acid resin.

6. The resin composition as defined in claim 5, wherein the nucleating agent is present selectively in the polylactic acid resin.

7. The resin composition as defined in claim 5, wherein the plastic resin superior in heat resistance to said polylactic acid resin and incompletely miscible with the polylactic acid resin is one which has a flexural modulus of elasticity no lower than 1000 MPa at 80°C.

8. The resin composition as defined in claim 7, wherein the plastic resin which has a flexural modulus of elasticity no lower than 1000 MPa at 80°C is at least one species selected from the group consisting of polycarbonate resin, polystyrene resin, acrylonitrile-butadiene-styrene copolymer resin, polyacetal resin, polyamide resin, polyethylene resin, polypropylene resin, and amorphous polyolefin resin.

9. The resin composition as defined in claim 5, wherein the nucleating agent is one which, when added to polylactic acid resin alone, causes the polylactic acid resin to express an exothermic enthalpy no smaller than 23 J/g per unit mass of polylactic acid resin due to crystallization at 100 to 150°C when measured by differential scanning calorimetry (DSC) in cooling from 180°C at a rate of 20°C/min.

10. The resin composition as defined in claim 6, wherein the nucleating agent is a polycyclic pigment represented by the structural formula (3) below.
